# EUROPEAN PATENT SPECIFICATION

(11) **EP 2 796 077 B1**
(45) Date of publication and mention of the grant of the patent: **09.08.2017**
(21) Application number: 12859645.9
(22) Date of filing: 21.12.2012
(51) Int. Cl.: A47J 19/02, A47J 43/04, C11B 1/04, A23N 1/02, C11B 1/06, B04B 1/02, B04B 5/10

(54) **MACHINE FOR OBTAINING OIL**
MASCHINE ZUR GEWINNUNG VON ÖL
MACHINE POUR L'OBTENTION D'HUILE

(30) Priority: 23.12.2011 ES 201132094
(43) Date of publication of application: 29.10.2014
(73) Proprietor: Mediterránea Identitat, S. L., 43850 Cambrils (Tarragona) (ES)
(72) Inventor: COSTA ESCODA, Telm, E-43850 Cambrils (Tarragona) (ES)
(74) Representative: Pons
(86) International application number: PCT/ES2012/070905
(87) International publication number: WO 2013/093169

(56) References cited:
- EP-A1- 2 338 357
- WO-A1-99/61568
- WO-A1-2010/000885
- CH-A5- 565 541
- GB-A- 206 181
- GB-A- 715 987
- US-A- 2 227 098
- US-A- 5 156 084

## Description

The present invention relates to a machine for the production of oil from a paste, preferably for the production of olive oil from olive paste.

The object of the invention consists of a machine fundamentally aimed for its domestic use or for its application in the restaurant industry for the instantaneous production of oil, simply and quickly from paste.

### BACKGROUND OF THE INVENTION

Machines for the production of oil from olive paste are known in the state of the art. An example is disclosed in EP 2338 357.

The olive paste is obtained by crushing the olive, without breaking the stone and it is later ground and the olive pulp is discarded. Subsequently, the olive paste, mixed with water, undergoes a separation and extraction process to finally obtain oil.

Some machines are known for the small production of olive oil which incorporate a mixing mechanism of said paste.

Some of these machines integrate in a single body the execution of various functions for the extraction of oil from the paste and have a first area of the machine wherein the mixing of the paste contained in at least one container is performed, a second area wherein the centrifugation of the paste is later performed for the production of a liquid and a solid and, finally, a third area where the liquid produced undergoes pressure or pumping and where a filtering of the liquid is finally performed, separating the oil from the water.

A set of containers is normally positioned in the mixing area of the machine wherein blades are located which rotate due to the action of a motor inside the container mixing the paste.

Later, the user transfers the above containers to the centrifuging area. The centrifuge comprises a central element which has a series of arms or hooks at which ends are defined housings designed to house in individualized manner and in radial disposal each one of the containers containing the already mixed paste. The central element rotates around its axis of symmetry so that each one of the containers rotates around said central element.

However, this machine has the following operational disadvantages.

In first place, it is a discontinuous process which requires the user's interaction for the change of containers from the mixing area to the centrifugation area or, failing this, it needs to incorporate an automated system which has displacement or transfer means of the containers between the different areas of the machine.

The radial disposal of the containers during the centrifugation has the drawback that there may be decalibration problems, for example, if one of the containers has less paste content than the other, with this giving rise to damages and faults in the machine. This radial disposal also limits the revolutions at which the containers may rotate around the central element, also due to the fact that increasing the speed may lead to said misalignment or calibration problems.

Finally, the radial disposal also has the drawback that the container volume is limited by the hook support capacity, making it necessary that, to reach a degree of pressure necessary with that volume for the extraction of liquid from the paste, the number of revolutions of the centrifuge has to be high.

The machine object of the invention overcomes the above disadvantages by a simple operation which does not require specialized knowledge of the user for its execution nor the intervention thereof once the extraction process of the liquid from the paste has started.

### DESCRIPTION OF THE INVENTION

The machine for the production of oil which constitutes the object of the invention proposes a compact and integral solution for the production of oil instantaneously from a paste, preferably olive oil from olive paste, which pursues the production of an exclusive product which can be instantly consumed both for a domestic application and in the restaurant industry. The application of this machine is also considered for the production of oil from peanut, hazelnut paste or other products or mixtures of these and other products.

It must be highlighted that this machine is applicable for the production of oil from a paste which may originally contain added components which give rise to oils with different flavours, and it is especially applicable for its use with an olive paste which is previously frozen.

It is a functionally simple and fast machine that can be used by any user, without the need to have specialized knowledge, for the production of oil for own consumption.

The machine for the production of oil fundamentally comprises a single body which includes in integrated manner a series of elements which performs the execution of a series of operations on the paste for the production of oil. The machine is devised so that the mixing of the paste and centrifugation operations are performed within the same body.

The machine is devised preferably for the treatment of the paste housed in containers; in this case the machine has a housing designed for the reception of at least one of said containers. However, said housing can directly house the paste without the need for it to be included in a container. The machine also has in the housing both a mixing and centrifugation devised for the separation of the liquid phase from the paste. The solid phase is normally then discarded.

Therefore, the machine for the production of oil from paste comprises:
- a body comprising at least one housing for inserting the paste,
- at least one mixing blade for mixing the paste which can be located in the housing so that in mixing position it is situated inside the housing,
- a centrifuge where the paste is centrifuged for the production of a liquid or a liquid and a solid, so that the mixing blade and the centrifuge are situated inside the body.

The invention is characterized in that the machine comprises means for rotating the housing around its axis of symmetry in order to centrifuge and mix the paste such that the centrifuging and mixing of the paste are carried out in the housing.

The above disposal means that the user does not have to move the container from a mixing area to a centrifugation area or that the machine requires means that perform an automatic movement of said container, facilitating the handling of the machine.

The fact that the paste housing rotates on its axis of symmetry means that the housing can contain a greater quantity of paste unlike a rotation of the housing around an axis located outside of it where the characteristics of resistance of the housing to the axis of rotation must also be considered. The fact that it can contain a greater volume of paste implies that the pressure exerted thereon is greater, managing to reach the centrifugation threshold with less revolutions of the housing. Likewise, it eliminates the problems of imbalance caused by the radial disposal.

Another of the advantages derived from the above configuration is that it a motor is solely necessary for the mixing and centrifugation actions, so that it reduces the number of machine parts and, therefore, improves the operation and maintenance thereof; it is the rotation of the housing together with the mixing blades which mix the paste and the rotation of the housing which centrifuges the paste.

The machine object of the invention, therefore, overcomes the aforementioned disadvantages by a simple operation which does not require specialized knowledge of the user for its execution nor the intervention thereof once the extraction process of the liquid from the paste has started.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1.- Shows a diagrammatic view of a section of an example of embodiment of the machine for the production of oil.
Figure 2.- Shows a perspective diagrammatic view of an example of embodiment of a housing for the paste.

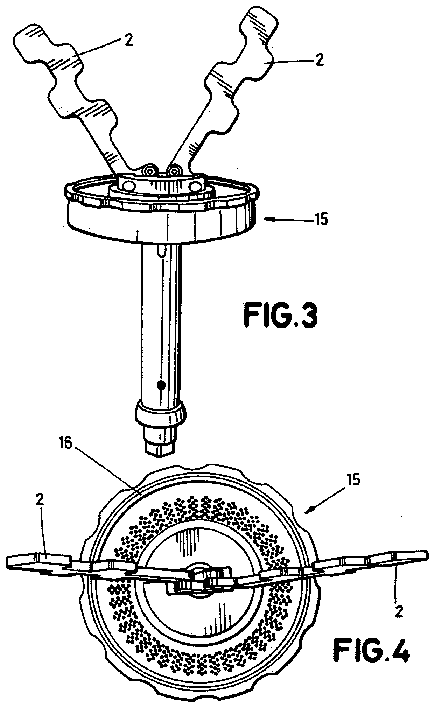

Figure 3.- Shows a perspective diagrammatic view of an example of embodiment of a set of mixing blades.
Figure 4.- Shows an upper perspective diagrammatic view of Figure 3.

### PREFERRED EMBODIMENT OF THE INVENTION

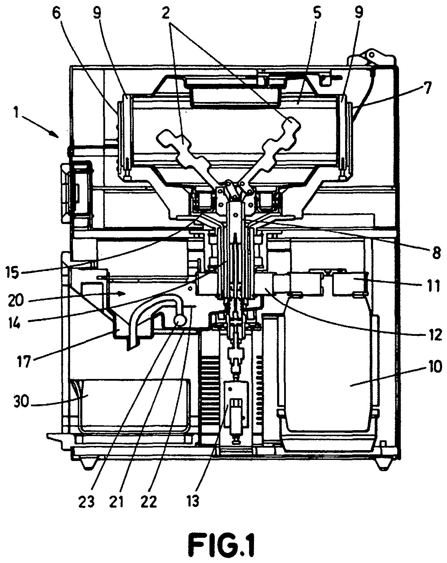

In figure 1, an example of embodiment of the machine for the production of oil is represented. As described above the machine comprises a body (1) which integrates both the mixing and centrifuging operations of a container (5) containing paste and which is located inside the housing (6), as well as the evacuation of the liquid produced and its later separation into oil and water.

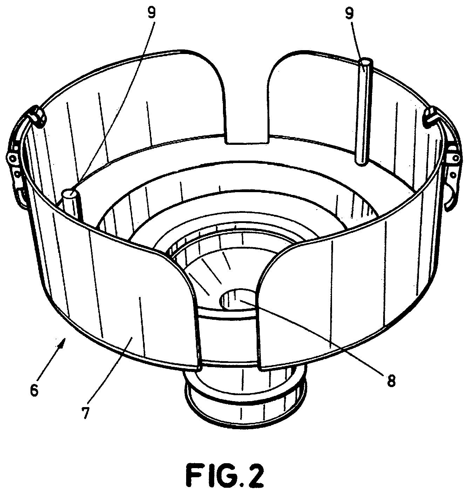

As commented, the machine comprises a housing (6) for the oil paste container (5), also see figure 2, inside of which said container (5) would be located.

More specifically, the housing (6) comprises a vessel (7) for inserting the container (5), the vessel (7) being disposed in connection with rotation means thereof (6) around its axis of symmetry.

In the example of embodiment shown in the figures, the housing (6) comprises a transmission means of the movement in connection with a drive motor (10) for its rotation around its axis of symmetry. More specifically, the housing (6) comprises coupled a first gear (12) in connection with a second gear (11) coupled to the drive motor (10).

The vessel (7) comprises an orifice (8) in its lower part both for the evacuation of the liquid generated by the centrifugation and for the positioning of at least one mixing blade (2) inside the vessel (7). In the example of embodiment shown, there are different mixing blades (2). In this way, when the vessel (7) rotates, the paste is also mixed. For this purpose, on rotating the vessel (7) the mixing blades (2) are still as they have no actuation for their rotation.

The container (5) also has an orifice in its lower part in correspondence with the orifice (8) to allow the outlet of the liquid and the insertion of the mixing blades (2) therein (5).

In order that the mixing blades (2) can remain in operating or mixing position in an inclined position with respect to the vertical thus managing to perform the mixing of the paste, but they may also be inserted through the orifice of the container (5) in an essentially vertical position, they (2) comprise means for the variation of their position between a first position wherein it allows the insertion of the mixing blades (2) through the orifice of the container (5) and a second mixing position. In other words, between a first position wherein the mixing blades (2) form a first angle with the vertical and a second position wherein the angle with the vertical is greater.

In the example of embodiment shown, these means comprise an electromagnet (13) situated in the body (1) in connection with the mixing blades (2) in connection in turn with means for the detection of the positioning of a container (5) in the vessel (7) configured so that on detecting the situation of a container (5) in the vessel (7) the mixing blades (2) pass to the mixing position and on detecting that the centrifuging of the container (5) has stopped they situate the mixing blades (2) in extraction position.

For the fixing between the container (5) and the vessel (7), the vessel (7) comprises different protuberances (9) in connection with a housing of the container (5) for the fixing thereof (5) and which when the vessel (7) rotates also cause the container (5) to rotate.

For the evacuation of the liquid extracted from the centrifugation, the vessel (7) comprises an extension (14) which extends to a collection area of the extracted liquid.

Likewise, the vessel (7) comprises a filter (15) located in the entrance of the extension (14).

With the object of facilitating the positioning of the mixing blades (2) inside the container (5) as well as the cleaning of the filter (15), the container (5)- mixing blades (2)-filter (15) assembly can be removed from the body (1). In this way, on the exterior of the body (1), the container (5) would be coupled to the filter (15) and to the mixing blades (2) and later inserted in the body (1). Once the body (1) detects that the container (5) is inserted it would activate the electromagnet (13).

The filter (15) comprises a thread (16) for its coupling to the lower part of the container (5), acting in this way additionally as lid thereof (5).

With the object that when the container (5) rotates the mixing blades (2) are still, to perform an efficient mixing of the paste, the filter (15) comprises a central housing for the passage of the blade and between both elements a rolling means is located so that the filter (15) rotates with the container (5) whilst the mixing blades (2) remain static.

In the example of embodiment shown, the mixing blades (2) are capitulated in order that the paste is correctly mixed.

The machine of the example of embodiment works with different rotation sequences of the housing (6), a first wherein the mixing operation is fundamentally performed, wherein the housing (6) rotates at low revolutions and a second phase wherein the centrifuging operation is fundamentally performed at higher revolutions.

Likewise, the machine comprises integrated in the body (1) a collection receptacle (20) of the liquid extracted. The collection receptacle (20) comprises a decanting bath (21). In this bath (21) the separation would occur by gravity between the oil and the water which may contain the liquid extracted from the paste. Due to difference of densities as the water is denser, it would remain in the bottom of the bath (21) and the oil in the upper part thereof (21). As the bath (21) capacity is exceeded, the oil would overflow its upper limit towards a funnel (17) which would collect it towards an external receptacle (30) wherein the oil would finally be separated.

Optionally, since as a result of the separation only by decanting there may still be drops of water in the oil, the machine incorporates the option that the bath (21) comprises an oil filter (22) located in the upper part of the bath (21) as well as a pressure means, for example a peristaltic pump (23) which forces the passage of the liquid through said oil filter (22).

In order to facilitate its cleaning, the collection receptacle (20) can be removed from the body (1).

## Claims

1. Machine for the production of oil from paste, **characterized in that** it comprises:
- a body (1) comprising at least one housing (6) for inserting the paste,
- at least one mixing blade (2) for mixing the paste which can be located in the housing (6) so that in mixing position it is situated inside the housing (6),
- a centrifuge (3) where the paste is centrifuged for the production of a liquid or a liquid and a solid, the mixing blade (2) and the centrifuge (3) being situated inside the body (1),
**characterized in that** it comprises means for rotating the housing (6) around its axis of symmetry in order to centrifuge and mix the paste such that the centrifuging and mixing of the paste are carried out in the housing (6).

2. Machine for the production of oil, according to claim 1, wherein the housing (6) comprises a vessel (7) for inserting a container (5) of paste comprising fixing means for fixing the container (5) and which is disposed in connection with rotation means for rotating the vessel (7) around its axis of symmetry and an orifice (8) for inserting the mixing blade inside the vessel (7) and the evacuation of the centrifuged liquid.

3. Machine for the production of oil, according to claim 2, wherein the mixing blade (2) comprises means for the variation of its position between a first position wherein it allows the insertion of the mixing blades (2) through an orifice of the container (5) and a second mixing position.

4. Machine for the production of oil, according to claim 3, wherein the means comprise an electromagnet (13) situated in the body (1) in connection with the mixing blades (2) in connection in turn with means for the detection of the positioning of a container (5) in the vessel (7) configured so that on detecting the situation of a container (5) in the vessel (7) the mixing blades (2) pass to the mixing position and on detecting that the centrifuging of the container (5) has stopped the mixing blades (2) are positioned in extraction position.

5. Machine for the production of oil, according to claim 4, wherein the housing (6) comprises a transmission means of the movement in connection with a drive motor (10) for its rotation around its axis of symmetry.

6. Machine for the production of oil, according to claim 5, wherein the housing (6) comprises coupled a first gear (12) in connection with a second gear (11) coupled to the drive motor (10).

7. Machine for the production of oil, according to claim 2, wherein the vessel (7) comprises at least one protuberance (9) in connection with a housing of the container (5) for the fixing thereof (5) to the vessel (7).

8. Machine for the production of oil, according to claim 2, wherein the vessel (7) comprises an extension (14) for the evacuation of the liquid produced.

9. Machine for the production of oil, according to claim 8, wherein the vessel (7) comprises a filter (15) located in the entrance of the extension (14).

10. Machine for the production of oil, according to claim 9, wherein the filter (15) comprises a thread for its coupling to the lower part of the container (5).

11. Machine for the production of oil, according to claim 10, wherein the filter (15) comprises a housing central for the passage of the mixing blade (2) and between both elements (15, 2) a rolling means is located so that the filter (15) rotates with the container (5) whilst the mixing blades (2) remain static.

12. Machine for the production of oil, according to claim 1, comprising a collection receptacle (20) of the liquid extracted comprising a decanting bath (21) the upper limit whereof is disposed in connection with a funnel (17) for collecting the decanted oil.

13. Machine for the production of oil, according to claim 12, wherein the bath (21) comprises an oil filter (22) located in its upper part and a pressure means which forces the passage of the liquid through the oil filter (22).

## Patentansprüche

1. Maschine zur Gewinnung von Öl aus Paste, **dadurch gekennzeichnet, dass** diese Folgendes umfasst:
- einen Körper (1), der mindestens ein Gehäuse (6) zur Einführung der Paste umfasst;
- mindestens ein Mischblatt (2) zur Mischung der Paste, das in dem Gehäuse (6) befindlich sein kann, sodass sich dieses in der Mischposition innerhalb des Gehäuses (6) befindet;
- eine Zentrifuge (3), wobei die Paste zentrifugiert wird, um eine Flüssigkeit oder eine Flüssigkeit und einen Feststoff zu erzeugen, wobei sich das Mischblatt (2) und die Zentrifuge (3) innerhalb des Körpers befinden;
**dadurch gekennzeichnet, dass** diese Mittel zur Drehung des Gehäuses (6) um seine Symmetrieachse umfasst, um die Paste zu zentrifugieren und zu mischen, sodass die Zentrifugierung und Mischung der Paste im Gehäuse (6) durchgeführt werden.

2. Maschine zur Gewinnung von Öl nach Anspruch 1, wobei das Gehäuse (6) ein Gefäß (7) zur Einführung eines Behälters (5) mit Paste umfasst, das Befestigungsmitteln zur Befestigung des Behälters (5) umfasst und in Verbindung mit Drehmitteln zur Drehung des Gefäßes (7) um dessen Symmetrieachse und einer Öffnung (8) zur Einführung des Mischblatts innerhalb des Gefäßes (7) und zur Evakuierung der zentrifugierten Flüssigkeit angeordnet ist.

3. Maschine zur Gewinnung von Öl nach Anspruch 2, wobei das Mischblatt (2) Mittel zur Veränderung seiner Position zwischen einer ersten Position, in der die Einführung der Mischblätter (2) durch eine Öffnung des Behälters (5) erlaubt ist, und einer zweiten Position umfasst.

4. Maschine zur Gewinnung von Öl nach Anspruch 3, wobei die Mittel einen Elektromagneten (13) umfassen, der im Körper (1) in Verbindung mit den Mischblättern (2) befindlich ist, die ihrerseits in Verbindung mit Mitteln zur Erkennung der Positionierung eines Behälters (5) im Gefäß (7) befindlich sind, so konfiguriert, dass die Mischblätter (2) bei Erkennung der Situation eines Behälters (5) im Gefäß (7) zur Mischposition wechseln und dass die Mischblätter (2) bei Erkennung, dass die Zentrifugierung des Behälters (5) gestoppt hat, in der Extraktionsposition positioniert werden.

5. Maschine zur Gewinnung von Öl nach Anspruch 4, wobei das Gehäuse (6) ein Übertragungsmittel der Bewegung in Verbindung mit einem Antriebsmotor (10) für dessen Drehung um seine Symmetrieachse umfasst.

6. Maschine zur Gewinnung von Öl nach Anspruch 6, wobei das Gehäuse (6) ein erstes gekuppeltes Zahnrad (12) in Verbindung mit einem zweiten Zahnrad (11) umfasst, das mit dem Antriebsmotor (10) gekoppelt ist.

7. Maschine zur Gewinnung von Öl nach Anspruch 2, wobei das Gefäß (7) mindestens einen Vorsprung (9) in Verbindung mit einem Gehäuse des Behälters (5) zur Befestigung desselben (5) an dem Gefäß (7) umfasst.

8. Maschine zur Gewinnung von Öl nach Anspruch 2, wobei das Gefäß (7) eine Verlängerung (14) zur Evakuierung der erzeugten Flüssigkeit umfasst.

9. Maschine zur Gewinnung von Öl nach Anspruch 8, wobei das Gefäß (7) einen Filter (15) umfasst, der sich am Eingang der Verlängerung (14) befindet.

10. Maschine zur Gewinnung von Öl nach Anspruch 9, wobei der Filter (15) ein Gewinde umfasst, um diesen mit dem unteren Teil der Behälters (5) zu kuppeln.

11. Maschine zur Gewinnung von Öl nach Anspruch 10, wobei der Filter (15) ein zentrales Gehäuse für den Durchlass des Mischblatts (2) umfasst und wobei sich zwischen beiden Elementen (15, 2) ein Rollmittel befindet, sodass der Filter (15) sich mit dem Behälter (5) dreht, während die Mischblätter (2) stationär verharren.

12. Maschine zur Gewinnung von Öl nach Anspruch 1, die ein Auffangbehältnis (20) der extrahierten Flüssigkeit umfasst, das ein Umfüllbad (21) umfasst, dessen oberster Rand in Verbindung mit einem Trichter (17) zum Auffangen des umgefüllten Öls angeordnet ist.

13. Maschine zur Gewinnung von Öl nach Anspruch 12, wobei das Bad (21) einen in seinem oberen Teil befindlichen Ölfilter (22) und ein Druckmittel umfasst, das den Durchlass der Flüssigkeit durch den Ölfilter (22) erzwingt.

## Revendications

1. Machine pour l'obtention d'huile à partir de pâte, **caractérisée en ce qu'**elle comprend :
- un corps (1) comprenant au moins un boîtier (6) pour introduire la pâte,
- au moins une pale de mélange (2) pour mélanger la pâte qui peut être placée dans le boîtier (6) pour qu'en position de mélange elle soit située à l'intérieur du boîtier (6),
- une centrifugeuse (3) où la pâte est centrifugée pour la production d'un liquide ou d'un liquide et d'un solide, la pale de mélange (2) et la centrifugeuse (3) étant situées à l'intérieur du corps (1),
**caractérisée en ce qu'**elle comprend un moyen pour faire tourner le boîtier (6) autour de son axe de symétrie afin de centrifuger et de mélanger la pâte pour que la centrifugation et le mélange de la pâte soient réalisés dans le boîtier (6).

2. Machine pour l'obtention d'huile, selon la revendication 1, où le boîtier (6) comprend une cuve (7) pour insérer un conteneur (5) de pâte comprenant un moyen de fixation pour fixer le conteneur (5) et qui est disposé en connexion avec le moyen de rotation pour faire tourner la cuve (7) autour de son axe de symétrie et un orifice (8) pour l'insertion de la pale de mélange à l'intérieur de la cuve (7) et l'évacuation du liquide centrifugé.

3. Machine pour l'obtention d'huile, selon la revendication 2, où la pale de mélange (2) comprend un moyen pour faire varier sa position entre une première position où elle permet l'insertion des pales de mélange (2) à travers un orifice du conteneur (5) et une seconde position de mélange.

4. Machine pour l'obtention d'huile, selon la revendication 3, où le moyen comprend un électro-aimant (13) situé dans le corps (1) en connexion avec les pales de mélange (2) elles-mêmes en connexion avec un moyen de détection du positionnement du conteneur (5) dans la cuve (7) configuré pour que lors de la détection de la situation du conteneur (5) dans la cuve (7) les pales de mélange (2) passent en position de mélange et lors de la détection de l'arrêt de la centrifugation du conteneur (5) les pales de mélange (2) sont placées en position d'extraction.

5. Machine pour l'obtention d'huile, selon la revendication 4, où le boîtier (6) comprend un moyen de transmission du mouvement en connexion avec un moteur d'entraînement (10) pour sa rotation autour de son axe de symétrie.

6. Machine pour l'obtention d'huile, selon la revendication 5, où le boîtier (6) comprend l'accouplement d'un premier engrenage (12) en connexion avec un second engrenage (11) accouplé au moteur d'entraînement (10).

7. Machine pour l'obtention d'huile, selon la revendication 2, où la cuve (7) comprend au moins une protubérance (9) en connexion avec un boîtier du conteneur (5) pour la fixation de ce dernier (5) à la cuve (7).

8. Machine pour l'obtention d'huile, selon la revendication 2, où la cuve (7) comprend une extension (14) pour l'évacuation du liquide produit.

9. Machine pour l'obtention d'huile, selon la revendication 8, où la cuve (7) comprend un filtre (15) situé à l'entrée de l'extension (14).

10. Machine pour l'obtention d'huile, selon la revendication 9, où le filtre (15) comporte un filetage pour son accouplement à la partie inférieure du conteneur (5).

11. Machine pour l'obtention d'huile, selon la revendication 10, où le filtre (15) comprend un boîtier central pour le passage de la pale de mélange (2) et entre les deux éléments (15, 2) se trouve un moyen de roulement pour que le filtre (15) tourne avec le conteneur (5) alors que les pales de mélange (2) restent statiques.

12. Machine pour l'obtention d'huile, selon la revendication 1, comprenant un réceptacle de collecte (20) du liquide extrait comprenant un bain de décantation (21) dont la limite supérieure est disposée en connexion avec un entonnoir (17) pour collecter l'huile décantée.

13. Machine pour l'obtention d'huile, selon la revendication 12, où le bain (21) comprend un filtre à huile (22) située dans sa partie supérieure et un moyen de pression qui pousse le liquide à passer à travers le filtre à huile (22).
